(19) Europäisches Patentamt
European Patent Office
Office européen des brevets

(11) Numéro de publication: **0 239 479 B1**

(12) # FASCICULE DE BREVET EUROPEEN

(45) Date de publication de fascicule du brevet: **11.03.92** (51) Int. Cl.[5]: **C01F 17/00**

(21) Numéro de dépôt: **87400602.6**

(22) Date de dépôt: **18.03.87**

(54) **Dispersions aqueuses colloidales d'un composé de cérium IV et leur procédé de préparation.**

(30) Priorité: **26.03.86 FR 8604348**

(43) Date de publication de la demande: **30.09.87 Bulletin 87/40**

(45) Mention de la délivrance du brevet: **11.03.92 Bulletin 92/11**

(84) Etats contractants désignés: **AT BE CH DE ES FR GB GR IT LI LU NL SE**

(56) Documents cités:
**EP-A- 0 078 098**
**EP-A- 0 186 313**
**EP-A- 0 206 906**
**EP-A- 0 208 580**
**FR-A- 2 080 975**
**FR-A- 2 416 867**
**GB-A- 2 075 478**
**US-A- 3 024 199**

(73) Titulaire: **RHONE-POULENC CHIMIE**
**25, quai Paul Doumer**
**F-92408 Courbevoie Cédex(FR)**

(72) Inventeur: **David, Claire**
**14bis, rue Friant**
**F-75014 Paris(FR)**
Inventeur: **Magnier, Claude**
**3, rue des Chaufourniers**
**F-75019 Paris(FR)**

(74) Mandataire: **Dutruc-Rosset, Marie-Claude et al**
**RHONE-POULENC INTERSERVICES Service Brevets Chimie 25, Ouai Paul Doumer**
**F-92408 Courbevoie Cédex(FR)**

**EP 0 239 479 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé d'obtention de dispersions aqueuses colloïdales d'un composé de cérium IV à forte concentration en cérium.

Il est connu selon l'Encyclopédie KIRK-OTHMER - Encyclopedia of Chemical Technology (deuxième édition) volume 4, p. 850 que l'on peut préparer un dioxyde cérique hydraté répondant à la formule $CeO_2$, x $H_2O$ dans laquelle x est un nombre compris entre 0,5 et 2 et se présentant sous la forme d'un précipité gélatineux par addition d'hydroxyde de sodium ou d'ammonium aux solutions de sels cériques.

On a proposé selon le brevet français 2 482 075 de préparer un composé de cérium IV dispersable dans l'eau selon un procédé qui consiste à disperser en milieu aqueux, un hydrate d'oxyde de cérium IV sensiblement sec ayant subi un traitement thermique entre 200 °C et 450 °C en présence d'un agent de désagrégation, notamment l'acide nitrique. Ainsi le chauffage en présence d'un agent de désagrégation réalise la désintégration des cristallites agrégés dans l'hydrate d'oxyde de cérium IV et produit ainsi un composé de cérium dispersable dans l'eau.

Il est mentionné dans ce brevet que la préparation de l'hydrate d'oxyde de cérium (IV) peut se réaliser par précipitation à partir d'un sel de cérium : ainsi par exemple, on peut dissoudre du carbonate céreux de grande pureté dans une solution d'acide nitrique ou chlorhydrique pour obtenir une solution neutre de nitrate ou chlorure céreux que l'on oxyde avec $NH_4OH$ / $H_2O_2$ pour obtenir l'hydrate d'oxyde de cérium IV.

Selon le procédé décrit dans l'art antérieur, on obtient des dispersions d'hydrate d'oxyde de cérium IV à gros colloïdes supérieurs à (500 Å) 50 nm.

Le but de la présente invention est de fournir un procédé de préparation des dispersions aqueuses colloidales à forte concentration en cérium obtenues à partir d'un composé de cérium IV directement dispersable en milieu aqueux acide sans passage par une étape de séchage.

On a obtenu des dispersions aqueuses colloïdales à forte concentration en cérium sels un procédé qui consiste :

- à préparer un hydroxynitrate de cérium répondant à la formule (I) :

  $Ce(OH)_x (NO_3)_y$ , n $H_2O$     (I)

  dans laquelle :
  - y est compris entre 0,25 et 0,35
  - x est tel que x = 4-y
  - n est compris entre environ 0 et environ 20 et de préférence entre 5 et 20 obtenu en faisant réagir une solution aqueuse d'un nitrate de cérium IV et d'une base,
- à séparer le précipité obtenu,
- à le laver,
- à disperser le produit obtenu en milieu aqueux acide nitrique.

La demanderesse a trouvé que pour obtenir des dispersions aqueuses colloïdales concentrées en cérium, il fallait mettre en oeuvre un hydroxynitrate de cérium IV de formule (I) présentant les caractéristiques définies ci-après et obtenu selon le procédé exposé ultérieurement.

La composition chimique du composé de formule (I) est confirmée qualitativement :

. par spectrophotométrie infrarouge

Le spectre obtenu par pastillage dans KBr permet de mettre en évidence les pics caractéristiques suivants :

- bande $OH^-$ = 3450 $cm^{-1}$
- bandes $NO_3^-$ :
  - liaisons $NO_3^-$ de type covalent :
    1320 $cm^{-1}$
    1470 $cm^{-1}$
    1045 $cm^{-1}$
  - liaisons $NO_3^-$ de type ionique :
    1385 $cm^{-1}$
    820 $cm^{-1}$

Le composé de formule (I) présente une forte proportion de liaisons nitrate de type ionique, ce qui est confirmé par le spectre Raman qui présente une raie intense à 1050 $cm^{-1}$

. par analyse thermique différentielle

Le produit est calciné sous atmosphère controlée d'air sec pour une montée en température de 300 °C par heure. Les résultats obtenus sont les suivants :

- 150 ° C : pic endothermique correspondant à une perte en eau
- 420 ° C : pic endothermique correspondant à une perte en $NO_x$.

La composition chimique du composé de formule (I) est confirmée quantitativement par thermogravimétrie :

Les résultats sont consignés dans le tableau suivant :

| | |
|---|---|
| 25 ° C/ 310 ° C<br>280 ° C/ 500 ° C | 40,5 % à 59,6 %<br>3,9 % à 5,6 % |
| ΔP 1000 ° C (perte de poids) | - 44,4 % à 65,2 % |

Conformément au procédé de l'invention, on prépare dans une première étape un composé de formule (I) en faisant réagir une solution de nitrate de cérium IV et une base de telle sorte que le pH du milieu réactionnel soit compris entre 4 et 9.

A cet effet, on part d'une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de nitrate de cérium est choisie de telle sorte qu'elle ne contienne pas d'impuretés qui puissent se retrouver, dans le produit final. Il peut être avantageux de mettre en jeu une solution de nitrate de cérium présentant un degré de pureté supérieure à 99 %.

La concentration de la solution de sel de cérium n'est pas un facteur critique, selon l'invention et peut donc varier dans de larges limites. Lorsqu'elle est exprimée en cérium IV, elle peut être choisie entre 0,3 et 3 moles/litre et de préférence entre 0,5 et 1,5 moles/litre.

La solution aqueuse du sel de cérium IV présente généralement une certaine acidité initiale et peut avoir une normalité variant entre 0,01 N et 5 N. La concentration en ions $H^+$ n'est pas critique. Il est souhaitable qu'elle se situe entre 0,1 N et 1 N.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans la demande de brevet français n° 84 13641 constitue une matière première de choix.

Une variante d'exécution de l'invention consiste à partir d'une solution aqueuse d'un composé de cérium IV ayant déjà subi une pré-neutralisation par ajout d'une solution basique, de préférence, une solution d'ammoniaque aise en jeu en quantité telle que le taux de neutralisation soit supérieur ou égal à -4 et inférieur ou égal à 2.

On définit le taux de neutralisation r par l'équation suivante :

$$r = \frac{n_3 - n_2}{n_1}$$

dans laquelle :

- $n_1$ représente le nombre de moles de $Ce^{IV}$ présentes dans le mélange ions-colloïdes obtenu
- $n_2$ représente le nombre de moles de $OH^-$ nécessaires pour neutraliser l'acidité apportée par la solution aqueuse de sel de cérium IV
- $n_3$ représente le nombre total de moles de $OH^-$ apportées par l'addition de la base.

D'une manière pratique, pour obtenir un taux de neutralisation désiré choisi dans l'intervalle précité pour une concentration donnée en cérium IV dans le mélange ions-colloïdes obtenu, on ajuste la concentration de la solution basique de telle sorte qu'elle satisfasse à l'équation suivante :

$$[OH^-] = \frac{(n_1 . r + n_2) [Ce\ IV]_f [Ce\ IV]_i}{n_1 ([Ce\ IV]_i - [Ce\ IV]_f)}$$

- $[OH^-]$ représente la concentration en moles/litre de la solution basique
- $[Ce\ IV]_f$ représente la concentration en Ce IV en moles/litre dans le mélange ions-colloïdes obtenu
- $[Ce\ IV]_i$ représente la concentration en Ce IV en moles/litre de la solution aqueuse de sel de cérium IV
- $n_1$ et $n_2$ sont déterminés par dosage classique de la solution aqueuse du sel de cérium IV :
  . $n_1$ par titrage potentiométrique à l'aide d'une solution d'un sel ferreux
  . $n_2$ par titrage acido-basique après complexation du cérium à l'aide d'ions oxalate.

Dans le procédé d'obtention des dispersions aqueuses colloïdales d'un composé de cérium IV selon l'invention, on fait réagir une solution aqueuse d'un sel de cérium IV éventuellement pré-neutralisée avec une base.

La base mise en oeuvre selon l'invention est de préférence une solution aqueuse d'ammoniaque. On peut également faire appel à l'ammoniac gazeux.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 2 et 10 N.

La quantité de base additionnée est déterminée de telle sorte que le pH du milieu réactionnel soit compris entre 4,0 et 9,0 et de préférence entre 5,0 et 7,0.

D'une manière pratique, on additionne la base dans la solution aqueuse de composé de cérium IV ou inversement. L'addition peut être effectuée en une seule fois, graduellement ou en continu. Elle s'effectue sous agitation.

On peut également conduire le procédé en continu. A cet effet, on effectue simultanément et en continu le mélange de la solution de sel de cérium IV et de la solution basique.

Préférentiellement, on choisit une voie de préparation en continu.

Les débits d'addition des solutions de réactifs sont régulés en fonction du pH choisi.

La température du milieu réactionnel est choisie entre 10 et 60°C et plus particulièrement à température ambiante qui se situe le plus souvent entre 10 et 25°C.

Le temps de séjour du précipité dans le milieu réactionnel peut varier entre 1 minute et plusieurs heures, par exemple 48 heures ou plus : la borne supérieure ne présente aucun caractère critique. Toutefois, un temps allant de 5 minutes à 30 minutes est généralement satisfaisant.

La deuxième étape du procédé consiste à séparer le précipité obtenu qui est en suspension dans le milieu réactionnel.

Le précipité peut être séparé du milieu réactionnel par les techniques courantes de séparation solide-liquide : filtration, décantation, centrifugation ou essorage.

Cette séparation est effectuée généralement à température ambiante.

On soumet ensuite le précipité à une opération de lavage.

Le lavage est opéré préférentiellement à l'eau. On utilise de préférence, de l'eau désionisée ou de l'eau distillée.

On effectue de un à plusieurs lavages et le plus souvent de 1 à 2 lavages.

Un mode de réalisation préféré de l'opération de lavage consiste à mettre le précipité séparé en suspension dans l'eau à raison par exemple de 100 à 300 g/l.

Après ce lavage, le précipité est séparé selon les techniques classiques précitées.

La teneur en eau libre du précipité séparé est comprise entre 20 et 80 % et généralement entre 40 et 70 %.

En éliminant l'eau de manière poussée, notamment en effectuant une filtration sous pression réduite (par exemple, comprise entre 10 et 200 mm de mercure), il est possible d'obtenir un hydroxynitrate de cérium de formule (I) dans laquelle n est proche de 0, c'est-à-dire $0 < n < 0,5$.

Conformément au procédé de l'invention, on obtient un hydroxynitrate de cérium répondant à la formule (I) qui présente la propriété de former directement en milieu acide une dispersion aqueuse colloïdale que l'on dénommera par la suite sous le nom de "sol".

On obtient un sol qui peut présenter une forte concentration en cérium en ajoutant le composé de cérium IV répondant à la formule (I) dans une solution aqueuse d'acide nitrique ayant un pH compris entre 0,5 et 2,0.

D'une manière préférentielle, on choisit un pH compris entre 0,5 et 1,5.

On effectue la préparation du sol de préférence sous agitation et à une température choisie de préférence entre 50 et 70°C. la durée du traitement thermique n'est pas critique et peut varier, par exemple, entre 5 et 30 minutes. Généralement, 5 à 10 minutes de traitement suffisent.

Dans le sol obtenu, le composé de cérium IV se trouve essentiellement sous la forme d'une dispersion colloïdale dans l'eau ce qui signifie que ledit composé a des particules de dimensions colloïdales mais ceci

n'exclut pas la présence de cérium IV sous forme ionique.

Le taux de cérium IV sous forme colloïdale est généralement compris entre 70 et 100 %.

Le sol aqueux obtenu selon l'invention présente une forte concentration en composé de cérium IV puisqu'il peut contenir de 400 g/l jusqu'à environ 700 g/l en poids de $CeO_2$.

La taille des colloïdes est définie par la mesure du diamètre hydrodynamique moyen des colloïdes déterminé par diffusion quasi-élastique de la lumière selon la méthode décrite par Michael L. McConnell dans "Analytical Chemistry, Vol. 53, n° 8, 1007 A (1981)".
Elle dépend de la concentration en cérium IV : les colloïdes sont d'autant plus gros que la concentration en cérium est plus importante mais leur taille reste relativement faible à forte concentration.

Généralement, le diamètre hydrodynamique moyen des colloïdes varie entre 8 et 40 nm (80 et 400 Å) et le plus souvent entre 8 et 30 nm (80 et 300 Å).

On remarquera que les sols obtenus selon le procédé de l'invention sont parfaitement stables dans les conditions habituelles de stockage ce qui est nettement mis en évidence dans les exemples.

Les dispersions aqueuses colloïdales de l'invention sont bien adaptées pour une application dans le domaine de la catalyse, notament pour l'imprégnation des supports catalytiques.

On donne ci-après des exemples qui illustrent l'invention sans toutefois la limiter.

Dans les exemples, les pourcentages donnés sont exprimés en poids.

EXEMPLE 1 -

a) - Préparation d'un composé de cérium IV répondant à la formule (I) :

Dans un réacteur à double-enveloppe dans laquelle circule de l'eau thermorégulée à 20 ° C et ayant une capacité utile de 500 $cm^3$, équipé d'un dispositif d'agitation, d'un système d'introduction de réactifs, on introduit simultanément et en continu :

- une solution aqueuse de nitrate cérique contenant 1 mole/litre de cérium IV, 0,06 mole/litre de cérium III et ayant une acidité libre de 0,46 N, préparée par électrolyse conformément à FR n° 84 13641, à raison de 2,6 litres/heure
- une solution aqueuse d'ammoniaque 3 N, à raison de 3,4 litres/heure.

Le mélange est effectué sous agitation de 600 tours/minute et le temps de séjour est de 5 minutes.

Les débits d'addition des solutions de départ sont régulés de telle sorte que le pH soit maintenu à 5,5.

On sépare le précipité formé par filtration sur Büchner.

On effectue ensuite deux lavages du précipité récupéré par mise en suspension dans l'eau de 100 g de précipité par litre d'eau.

On obtient un produit humide contenant 45 % de $CeO_2$.

b) - Préparation d'un sol aqueux de composé de cérium IV

A 12,5 g d'un composé préparé selon a), on ajoute 15 $cm^3$ d'eau et 3 $cm^3$ d'une solution d'acide nitrique 3,5 N. On chauffe à 70 ° C pendant 10 minutes puis on laisse refroidir à température ambiante.

On obtient un sol ayant une concentration exprimée en $CeO_2$ de 200 g/l, un pH de 0,8 et une densité de 1,19.

L'examen par diffusion quasi-élastique de la lumière montre la présence de colloïdes de diamètre hydrodynamique moyen de (100 Å) 10 nm.

Le sol ainsi obtenu est stable au stockage effectué à température ambiante pendant au moins 6 mois.

A 10 $cm^3$ du sol préparé ci-dessus, on ajoute 9 $cm^3$ d'une solution de nitrate d'ammonium 4 M.

On obtient un sol contenant 150 g/l de nitrate d'ammonium et dont le diamètre hydrodynamique moyen de ses colloïdes est de 12 nm (120 Å). Le sol de l'invention est donc peu sensible à la variation de la force ionique du milieu.

EXEMPLE 2 -

a) - Préparation d'un composé de cérium IV répondant à la formule (I)

Elle est effectuée selon le mode opératoire de l'exemple 1.

b) - Préparation d'un sol aqueux de composé de cérium IV

A 31 g d'un composé préparé selon a), on ajoute 15 $cm^3$ d'eau et 3 $cm^3$ d'une solution d'acide nitrique 3,5 N. On chauffe à 70 ° C pendant 10 minutes puis on laisse refroidir à température ambiante.

On obtient un sol ayant une concentration exprimée en $CeO_2$ de 510 g/l et une densité de 1,47.

L'examen par diffusion quasi-élastique de la lumière montre la présence de colloïdes ayant un diamètre hydrodynamique moyen de (250 Å) 25 nm.

EXEMPLE 3 -

a) - Préparation d'un composé de cérium IV répondant à la formule (I)

Dans un appareillage tel que décrit dans l'exemple 1, on introduit simultanément et en continu :

- une solution aqueuse de nitrate cérique contenant 1,58 mole/litre de cérium IV, 0,06 mole/litre de cérium III et ayant une acidité libre de 0,46 N à raison de 1,12 litre/heure
- une solution aqueuse d'ammoniaque 3 N à raison de 2,3 litres/heure.

Le mélange est effectué sous agitation de 600 tours/minute.

Les débits d'addition des solutions de départ sont régulés de telle sorte que le pH soit maintenu à 4,7.

On sépare le précipité formé par filtration sur Büchner.

On effectue ensuite deux lavages par mise en suspension dans l'eau.

On obtient un produit humide contenant 55 % de $CeO_2$.

b) - Préparation d'un sol aqueux de composé de cérium IV

A 12,5 g d'un composé préparé selon a), on ajoute 15 $cm^3$ d'eau et 3 $cm^3$ d'une solution d'acide nitrique 3,5 N. On chauffe à 70 ° C pendant 10 minutes puis on laisse refroidir à température ambiante.

On obtient un sol ayant une concentration exprimée en $CeO_2$ de 225 g/l, un pH de 1,2 et une densité de 1,21.

L'examen par diffusion quasi-élastique de la lumière montre la présence de colloîdes ayant un diamètre hydrodynamique de (113 Å) 11,3 nm.

EXEMPLE 4 -

a) - Préparation d'un composé de cérium IV répondant à la formule (I)

Elle est effectuée selon le mode opératoire de l'exemple 3.

b) - Préparation d'un sol aqueux de composé de cérium IV

A 32 g d'un composé préparé selon a), on ajoute 15 $cm^3$ d'eau et 3 $cm^3$ d'une solution d'acide nitrique 3,5 N. On chauffe à 70 ° C pendant 10 minutes puis on laisse refroidir à température ambiante.

On obtient un sol ayant une concentration exprimée en $CeO_2$ de 615 g/l, un pH de 0,6 et une densité de 1,57.

L'examen par diffusion quasi-élastique de la lumière montre la présence de colloïdes ayant un diamètre hydrodynamique moyen de (318 Å) 31,8 nm.

EXEMPLE 5 -

a) - Préparation d'un composé de cérium IV répondant à la formule (I)

Dans un réacteur équipé comme dans l'exemple 1, on introduit 500 $cm^3$ d'une solution aqueuse de nitrate cérique contenant 1,8 mole/litre de cérium IV, 0,06 mole/litre de cérium III et ayant une acidité libre de 0,66 N.

On additionne jusqu'à obtention d'un pH de 5,5 une solution aqueuse d'ammoniaque 3 N à un débit de 355 $cm^3$/heure.

Le mélange réactionnel est maintenu sous agitation de 400 tours/minute.

On sépare le précipité formé par filtration sur Büchner.

On effectue ensuite deux lavages par mise en suspension dans l'eau.

On obtient un produit humide contenant 43 % de $CeO_2$.

b) - Préparation d'un sol aqueux acide de composé de cérium IV

A 12,5 g du composé préparé selon a), on ajoute 15 $cm^3$ d'eau et 3 $cm^3$ d'une solution aqueuse d'acide nitrique 3,5 N. On chauffe à 70 °C pendant 10 minutes puis on laisse refroidir à température ambiante.

On obtient un sol ayant une concentration exprimée en $CeO_2$ de 190 g/l et un pH de 0,9.

L'examen par diffusion quasi-élastique de la lumière montre la présence de colloïdes ayant un diamètre hydrodynamique moyen de 14 nm (140 Å).

EXEMPLE 6 -

a) - Préparation d'un composé de cérium IV répondant à la formule (I)

On reproduit l'exemple 1 à la différence près que la solution de départ de nitrate cérique est une solution pré-neutralisée par ajout de 230 $cm^3$ d'une solution aqueuse d'ammoniaque 2 N par litre de solution de nitrate cérique : le taux de neutralisation est alors égal à 0,025.

Cette solution sert de réactif de départ à la préparation du composé de cérium IV effectuée selon les conditions de l'exemple 1.

b) - Préparation d'un sol aqueux acide de composé de cérium IV

A 12,5 g d'un composé préparé selon a), on ajoute 15 $cm^3$ d'eau et 3 $cm^3$ d'une solution d'acide nitrique 3,5 N. On chauffe à 70 °C pendant 10 minutes puis on laisse refroidir à température ambiante. On obtient un sol ayant une concentration exprimée en $CeO_2$ de 240 g/l.

L'examen par diffusion quasi-élastique de la lumière montre la présence de colloïdes ayant un diamètre hydrodynamique moyen de 11,8 nm (118 Å).

**Revendications**

**1.** Procédé de préparation de dispersions aqueuses colloïdales d'un composé de cérium IV caractérisé en ce qu'il consiste :
- à préparer un hydroxynitrate de cérium répondant à la formule (I) suivante :

  $Ce(OH)_x (NO_3)_y , n H_2O$ (I)

  dans laquelle :
  - y est compris entre 0,25 et 0,35
  - x est tel que x = 4-y
  - n est compris entre 5 et 20
  obtenu en faisant réagir une solution aqueuse d'un nitrate de cérium IV avec une base pour obtenir un pH compris entre 4 et 9
- à séparer le précipité obtenu,
- à le laver,
- à disperser le produit obtenu en milieu aqueux acide nitrique.

**2.** Procédé selon l'une des revendications 1 à 2 caractérisé par le fait que la solution aqueuse de sel de cérium IV est une solution provenant de l'oxydation électrochimique d'une solution de nitrate céreux ou une solution obtenue par action de l'acide nitrique sur un oxyde cérique hydraté.

**3.** Procédé selon l'une des revendications 1 à 3 caractérisé par le fait que la solution aqueuse de sel de cérium IV est une solution ayant subi une pré-neutralisation par ajout d'une solution d'ammoniaque mise en jeu en quantité telle que le taux de neutralisation r soit supérieur ou égal à -4 et inférieur ou égal à 2, le taux de neutralisation r étant défini par la formule :

$$r = \frac{n_3 - n_2}{n_1}$$

dans laquelle :

- $n_1$ représente le nombre de moles de $Ce^{IV}$ présentes dans le mélange ions-colloïdes obtenu
- $n_2$ représente le nombre de moles de $OH^-$ nécessaires pour neutraliser l'acidité apportée par la solution aqueuse de sel de cérium IV
- $n_3$ représente le nombre total de moles de $OH^-$ apportées par l'addition de la base.

**4.** Procédé selon l'une des revendications 1 à 4 caractérisé par le fait que la concentration de la solution de sel de cérium exprimée en cérium IV est comprise entre 0,3 et 3 moles par litre.

**5.** Procédé selon la revendication 1 caractérisé par le fait que la base est une solution d'ammoniaque.

**6.** Procédé selon la revendication 1 caractérisé par le fait que la quantité de base additionnée est déterminée de telle sorte que le pH du milieu réactionnel soit compris entre 5,0 et 7,0.

**7.** Procédé selon l'une des revendications 1 à 7 caractérisé par le fait que l'on additionne la base en une seule fois, graduellement ou en continu dans la solution aqueuse de sel de cérium IV ou inversement.

**8.** Procédé selon l'une des revendications 1 à 7 caractérisé par le fait que l'on effectue simultanément et en continu le mélange de la solution de sel de cérium IV et de la solution basique.

**9.** Procédé selon l'une des revendications 1 à 9 caractérisé par le fait que la température réactionnelle est comprise entre 10 et 60 ° C.

**10.** Procédé selon l'une des revendications 1 à 10 caractérisé par le fait que le temps de séjour du précipité dans le milieu réactionnel varie entre 1 minute et 48 heures.

**11.** Procédé sels l'une des revendications 1 à 11 caractérise par le fait que l'on sépare le précipité par les techniques de séparation solide-liquide : filtration, décantation, centrifugation ou essorage.

**12.** Procédé selon l'une des revendications 1 à 12 caractérisé par le fait que l'on effectue de un à plusieurs lavages à l'eau.

**13.** Procédé selon la revendication 13 caractérisé par le fait que l'opération de lavage est effectuée par mise en suspension dans l'eau du précipité séparé à raison de 100 à 300 g/l, puis le précipité est à nouveau séparé.

**14.** Procédé selon les revendications 1 à 14 caractérisé par le fait que l'on disperse le composé de cérium IV répondant à la formule (I) dans une solution aqueuse nitrique ayant un pH compris entre 0,5 et 2,0.

**15.** Procédé selon la revendication 15 caractérisé par le fait que l'on effectue un traitement thermique de la dispersion colloïdale entre 50 et 70 ° C.

**16.** Procédé selon la revendication 16 caractérisé par le fait que la durée du traitement thermique varie entre 5 et 30 minutes.

## Claims

**1.** Process for preparing colloidal aqueous dispersions of a cerium IV compound, characterised in that it consists in:

- preparing a cerium hydroxide nitrate corresponding to the following formula (I):

$Ce(OH)_x (NO_3)_y . n H_2O$ (I)

in which:
- y is between 0.25 and 0.35
- x is such that x = 4-y
- n is between 5 and 20
  obtained by reacting an aqueous solution of a cerium IV nitrate with a base to obtain a pH of between 4 and 9
- separating the precipitate obtained,
- washing it, and
- dispersing the product obtained in an aqueous nitric acid medium.

**2.** Process according to Claim 1, characterised in that the aqueous solution of cerium IV salt is a solution originating from the electrochemical oxidation of a solution of cerous nitrate or a solution obtained by the action of nitric acid on a hydrated ceric oxide.

**3.** Process according to one of Claims 1 and 2, characterised in that the aqueous solution of cerium IV salt is a solution which has undergone a prior neutralisation by adding an ammonia solution, introduced in an amount such that the degree of neutralisation r is greater than or equal to -4 and less than or equal to 2, the degree of neutralisation r being defined by the formula:

$$r = \frac{n_3 - n_2}{n_1}$$

in which:
- $n_1$ represents the number of moles of $Ce^{IV}$ present in the ions/colloids mixture obtained
- $n_2$ represents the number of moles of $OH^-$ necessary for neutralizing the acidity contributed by the aqueous solution of cerium IV salt
- $n_3$ represents the total number of moles of $OH^-$ provided by adding the base.

**4.** Process according to one of Claims 1 to 3, characterised in that the concentration of the solution of cerium salt, expressed as cerium IV, is between 0.3 and 3 moles per litre.

**5.** Process according to Claim 1, characterised in that the base is an ammonia solution.

**6.** Process according to Claim 1, characterised in that the amount of base added is determined in such a way that the pH of the reaction medium is between 5.0 and 7.0.

**7.** Process according to one of Claims 1 to 6, characterised in that the base is added in a single portion, gradually or in continuous fashion, to the aqueous solution of cerium IV salt, or vice versa.

**8.** Process according to one of Claims 1 to 6, characterised in that the mixing of the solution of cerium IV salt and the basic solution is performed simultaneously and in continuous fashion.

**9.** Process according to one of Claims 1 to 8, characterised in that the reaction temperature is between 10 and 60 ° C.

**10.** Process according to one of Claims 1 to 9, characterised in that the residence time of the precipitate in the reaction medium varies between 1 minute and 48 hours.

**11.** Process according to one of Claims 1 to 10, characterised in that the precipitate is separated by solid-liquid separation techniques: filtration, decantation, centrifugation or draining.

**12.** Process according to one of Claims 1 to 11, characterised in that one or more washes with water are performed.

**13.** Process according to Claim 12, characterised in that the washing operation is performed by suspending the separated precipitate in water in the proportion of 100 to 300 g/l, and the precipitate is then separated again.

**14.** Process according to one of Claims 1 to 13, characterised in that the cerium IV compound corresponding to the formula (I) is dispersed in an aqueous nitric solution having a pH of between 0.5 and 2.0.

**15.** Process according to Claim 14, characterised in that a thermal treatment of the colloidal dispersion is performed at between 50 and 70 ° C.

**16.** Process according to Claim 15, characterised in that the period of thermal treatment varies between 5 and 30 minutes.

**Patentansprüche**

**1.** Verfahren zur Herstellung von wäßrigen kolloidalen Dispersionen aus einer Cer-IV-Verbindung, gekennzeichnet durch:

- Herstellen von Cerhydroxynitrat, das folgender Formel (I) entspricht:

  $Ce(OH)_x(NO_3)_y,n\ H_2O$ (I)

  in der:
- y zwischen 0,25 und 0,35
- x gleich x = 4-y
- n zwischen 5 und 20 ist
  erhalten durch Reaktion einer wäßrigen Cer-IV-nitrat-Lösung mit einer Base, um einen pH-Wert zwischen 4 und 9 zu erhalten,
- Abtrennen des erhaltenen Niederschlags,
- Waschen,
- Dispergieren des erhaltenen Produkts in einem wäßrigen salpetersauren Milieu.

**2.** Verfahren nach Anspruch 1, dadurch gekennzeichnet, daß die wäßrige Lösung des Cer-IV-Salzes aus einer elektrochemischen Oxidation einer Cer-III-Nitrat-Lösung stammt oder durch Einwirkung von Salpetersäure auf ein hydratisiertes Cer-IV-Oxid erhalten wurde.

**3.** Verfahren nach einem der Ansprüche 1 oder 2, dadurch gekennzeichnet, daß die wäßrige Lösung des Cer-IV- Salzes eine Lösung ist, die eine Vorneutralisation durch Hinzufügen einer Amoniak-Lösung in einer solchen Menge erfahren hat, daß der Neutralisationsgrad r größer oder gleich -4 und kleiner oder gleich 2 ist, wobei der Neutralisationsgrad r durch die Formel:

$$r = \frac{n_3 - n_2}{n_1}$$

definiert ist, in der:

- $n_1$ die Anzahl der Mole von Cer-IV bedeuten, die in dem erhaltenen Ionen-Kolloid-Gemisch vorhanden sind
- $n_2$ die Anzahl der Mole $OH^-$ bedeuten, die notwendig sind, um die von der wäßrigen Cer-IV-Salzlösung eingebrachte Azididät zu neutralisieren
- $n_3$ die Gesamtanzahl der Mole $OH^-$ bedeutet, die durch das Hinzufügen der Base eingebracht werden.

**4.** Verfahren nach einem der Ansprüche 1 bis 3, dadurch gekennzeichnet, daß die Konzentration der Cer-Salzlösung, ausgedrückt als Cer-IV, zwischen 0,3 und 3 Mol pro Liter liegt.

5. Verfahren nach Anspruch 1, dadurch gekennzeichnet, daß die Base eine Amoniaklösung ist.

6. Verfahren nach Anspruch 1, dadurch gekennzeichnet, daß die hinzugefügte Menge der Base so bemessen ist, daS der pH-Wert des Reaktionsmediums zwischen 5,0 und 7,0 liegt.

7. Verfahren nach einem der Ansprüche 1 bis 6, dadurch gekennzeichnet, daß man die Base auf einmal, schrittweise oder kontinuierlich der wäßrigen Cer-IV-Salz-Lösung zufügt oder umgekehrt.

8. Verfahren nach einem der Ansprüche 1 bis 6, dadurch gekennzeichnet, daß man das Vermischen der Cer-IV-Salz-Lösung und der basischen Lösung gleichzeitig und kontinuierlich durchführt.

9. Verfahren nach einem der Ansprüche 1 bis 8, dadurch gekennzeichnet, daß die Reaktionstemperatur zwischen 10° und 60°C liegt.

10. Verfahren nach einem der Ansprüche 1 bis 9, dadurch gekennzeichnet, daß die Verweilzeit des Niederschlags im Reaktionsmedium zwischen 1 Minute und 48 Stunden schwankt.

11. Verfahren nach einem der Ansprüche 1 bis 10, dadurch gekennzeichnet, daß man den Niederschlag durch Fest-Flüssig-Trennmethoden trennt: Filtration, Dekantierung, Zentrifugieren oder Absaugen.

12. Verfahren nach einem der Ansprüche 1 bis 11, dadurch gekennzeichnet, daß man eine oder mehrere Wäschen mit Wasser vornimmt.

13. Verfahren nach Anspruch 12, dadurch gekennzeichnet, daß der Waschvorgang durch Suspendieren des abgetrennten Niederschlags in Wasser im Verhältnis von 100 bis 300 g/l vorgenommen wird und dann der Niederschlag erneut abgetrennt wird.

14. Verfahren nach einem der Ansprüche 1 bis 13, dadurch gekennzeichnet, daß man die Cer-IV-Verbindung entsprechend der Formel I in einer wäßrigen Salpetersäurelösung dispergiert, die einen pH-Wert zwischen 0,5 und 2,0 hat.

15. Verfahren nach Anspruch 14, dadurch gekennzeichnet, daß man eine thermische Behandlung der kolloidalen Dispersion zwischen 50° und 70°C vornimmt.

16. Verfahren nach Anspruch 15, dadurch gekennzeichnet, daß die Dauer der thermischen Behandlung zwischen 5 und 30 Minuten schwankt.